(19) Europäisches Patentamt / European Patent Office / Office européen des brevets

(11) **EP 3 073 515 A1**

(12) **EUROPEAN PATENT APPLICATION**
published in accordance with Art. 153(4) EPC

(43) Date of publication:
**28.09.2016 Bulletin 2016/39**

(21) Application number: **14863090.8**

(22) Date of filing: **07.11.2014**

(51) Int Cl.:
*H01L 21/301* (2006.01)    *C09J 7/02* (2006.01)

(86) International application number:
**PCT/JP2014/079617**

(87) International publication number:
**WO 2015/076127 (28.05.2015 Gazette 2015/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **22.11.2013 JP 2013242298**

(71) Applicant: Lintec Corporation
**Tokyo 173-0001 (JP)**

(72) Inventors:
• **NAKAMURA, Junichi**
  **Itabashi-ku, Tokyo 173-0001 (JP)**
• **MIYAZAKI, Kentaro**
  **Itabashi-ku, Tokyo 173-0001 (JP)**
• **TAYA, Naoki**
  **Itabashi-ku, Tokyo 173-0001 (JP)**

(74) Representative: **Raynor, Stuart Andrew**
**J A Kemp**
**14 South Square**
**Gray's Inn**
**London WC1R 5JJ (GB)**

(54) **DICING-SHEET BASE FILM AND BASE-FILM MANUFACTURING METHOD**

(57)    A base film is provided which can suppress the occurrence of cutting fragments in the dicing step and is excellent in the expandability and recoverability. The base film (2) includes an expandable layer (B) laminated on a cutting-fragment suppression layer (A) and having a laminate structure of a plurality of resin-based sublayers. The resin-based sublayer (B1) disposed nearest to the cutting-fragment suppression layer (A) has a stress-relaxation rate (R1) after 5 minutes of 10%-stretching. The resin-based sublayer (B2) other than the resin-based sublayer (B1) disposed nearest to the cutting-fragment suppression layer (A) has a stress-relaxation rate (R2) after 5 minutes of 10%-stretching. The stress-relaxation rate R1 and the stress-relaxation rate R2 satisfy the conditions represented by Expressions (i) to (iii) below. The cutting-fragment suppression layer (A) contains a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

$$R1 \leq 30\% \qquad (i)$$

$$R2 \geq 20\% \qquad (ii)$$

$$R1 < R2 \qquad (iii)$$

Fig. 1

**Description**

[Technical Field]

The present invention relates to a dicing sheet to which a cut object such as a semiconductor wafer is attached when the cut object is cut and separated into small element pieces, and also relates to a base film used for the dicing sheet and a method of manufacturing the base film.

[Background Art]

Semiconductor wafers such as silicon and gallium arsenide wafers, substrates such as glass and alumina substrates, and various types of packages (these will be collectively referred to as "cut objects" or a "cut object" in the present description) are manufactured in a large diameter state, and these are cut and separated (diced) into small element pieces (referred to as "chips" in the present description).

A cut object to be supplied to the dicing step may be prepared such that, for the purpose of ensuring the handling property of the cut object and chips in the dicing step and subsequent steps, a dicing sheet is preliminarily attached to a surface of the cut object opposite to the side which a cutting tool for cutting comes close to. In such a dicing sheet, a polyolefin-based film, a polyvinyl chloride-based film or the like is typically used as a base film, and a pressure sensitive adhesive layer is provided on the base film.

In the full-cut dicing which is commonly used as a specific method for the dicing step, cutting of a cut object may be performed using a rotating round blade. In this operation, to ensure cutting of the cut object attached thereto with the dicing sheet, not only the cut object but also the pressure sensitive adhesive layer is cut, and a part of the base film may further be cut.

During this operation, cutting fragments of materials that constitute the pressure sensitive adhesive layer and base film are generated from the dicing sheet, and the obtained chips may be contaminated with the cutting fragments. Such cutting fragments may be in a form of filament-like cutting fragments that attach onto a dicing line or to an area near the cut surface of each chip separated by the dicing.

If the chip is enclosed in a package while a large amount of the filament-like cutting fragments as the above remains attached to the chip, the filament-like cutting fragments attached to the chip will be decomposed by heat for the enclosing, and the thermally decomposed substance may destroy the package and/or cause operational failure in a device obtained. Such filament-like cutting fragments are difficult to remove by washing, and the yield of the dicing step will thus be considerably reduced due to the generation of filament-like cutting fragments. Therefore, when the dicing is performed using a dicing sheet, it is required to prevent the generation of filament-like cutting fragments.

When dicing a package as the cut object in which plural chips are enclosed using cured resin, a dicing blade having a thicker blade width is used and the cutting depth in dicing also becomes deeper than the case of dicing a semiconductor wafer. Consequently, the amount of the base film to be cut and removed during the dicing may increase compared with the case of a semiconductor wafer, and this may result in a tendency that the generated amount of filament-like cutting fragments also increases.

To suppress the generation of such cutting fragments, Patent Literature 1 discloses an invention in which a polyolefin-based film irradiated with 1 to 80 Mrad of electron rays or γ (gamma) rays is used as the base film of a dicing sheet. In this invention, it appears that a resin that constitutes the base film is crosslinked through irradiation with the electron rays or γ rays thereby to suppress the generation of cutting fragments.

Patent Literature 1 exemplifies, as materials for the polyolefin-based film to be irradiated with electron rays or γ rays, resins such as polyethylene, polypropylene, polymethylpentene, ethylene-vinyl acetate copolymer, ethylene-(meth)acrylic acid copolymer, ethylene-methyl (meth)acrylic ester copolymer, ethylene-ethyl (meth)acrylic acid copolymer, ethylene-ionomer copolymer, ethylene-vinyl alcohol copolymer, and polybutene.

The "(meth)acrylic acid" as used in the present description means both acrylic acid and methacrylic acid. The same applies to other similar terms.

[Prior Art Literature]

[Patent Literature]

[Patent Literature 1] JP H05-211234A

[Summary of the Invention]

[Problems to be solved by the Invention]

However, the irradiation with electron rays or γ rays is performed after the resin as the above is once formed into a film-like shape, which requires an additional production step. Therefore, the production cost tends to be high compared with that for a standard base film.

After the dicing process for dividing the cut object into individual chips to obtain a state in which the plural chips are arranged close to one another on the dicing sheet, an expanding step may be performed for the purpose of separating these chips from one another. In the expanding step, the dicing sheet is applied with tensile force so as to be elongated in a direction or directions on the main surface. To perform the expanding step, the dicing sheet is made to be in a state in which the chips are attached to the central region of the dicing sheet while a ring frame is attached to the outer circumferential region of the dicing sheet. In this state, a ring-like member is made to come into contact with a region between the region to which the chips are attached and the region to which the ring frame is attached, and the relative positions of the ring-like member and the ring frame are varied in the vertical direction. This allows the dicing sheet to be applied with the tensile force. In general, the ring frame may be pulled down with respect to the ring-like member to vary the above relative positions in the vertical direction.

In recent years, the dicing pitch may be reduced in accordance with a reduced size of chips. In this case, to ensure a sufficient space between adjacent chips after the expanding step, the tensile force applied to the dicing sheet tends to be high in the expanding step so as to increase the elongation amount (expanding amount) of the dicing sheet in the main surface. Therefore, dicing sheets for such use are required not to fracture even when applied with higher tensile force than that for conventional ones. In the present description, the "dicing pitch" means a distance between center lines of two dicing lines that are parallel and adjacent to each other, among dicing lines formed due to the dicing process. When the dicing process is performed using a rotating dicing blade, the stepwise feeding width for the dicing blade in the direction perpendicular to the direction of rotation of the dicing blade is the dicing pitch.

To reduce the takt time in the expanding step, the elongation speed (expanding speed) in the main surface of the dicing sheet also tends to be high. Specifically, the takt time may be increased to about 20 mm/sec and further to about 40 mm/sec from the conventional takt time of about 10 mm/sec. Such a high expanding speed may temporarily deteriorate the in-plane uniformity of tensile force applied to the dicing sheet, thus increasing the possibility of causing a portion of the dicing sheet to be locally applied with high tensile force. As a result, if the dicing speed is high, the dicing sheet is likely to fracture. Therefore, a base film that is less likely to fracture even with a high expanding speed is demanded. With regard to the base film as one of constitutional elements of a dicing sheet, a base film that is less likely to fracture even with an increased expanding amount and a high expanding speed as the above may be referred to as a "base film excellent in expandability" in the present description.

In addition, an increased expanding amount as the above may cause loosening of the dicing sheet immediately after the expanding work to such an extent that affects the subsequent steps. Specifically, if the loosening amount due to the expanding work (the displacement distance in the vertical direction of the bottom surface of the dicing sheet with reference to the lower side surface of a portion of the dicing sheet which is attached to the ring frame) is unduly large, the loosened bottom surface of the dicing sheet or the vicinity thereof will readily collide with foreign materials during transportation, thus leading to poor handling ability when using the dicing sheet. Therefore, when the loosening amount of the dicing sheet is large, the dicing sheet may be partially heated to allow the thermal shrinkage of the base film that constitutes the dicing sheet, so that the loosening amount of the dicing sheet can be reduced. In the present description, the phenomenon that the loosening amount of the dicing sheet is reduced on the basis of the thermal shrinkage of the base film as the above may be referred to as "recover, " and a base film capable of providing at least one of the property of allowing easy recover and the property of having a large recovery amount may be referred to as a "base film excellent in recoverability."

An object of the present invention is to provide a base film that is less likely to generate cutting fragments in the dicing step and excellent in the expandability and recoverability. Another object of the present invention is to provide a dicing sheet that comprises the base film. Still another object of the present invention is to provide a method of manufacturing the base film.

[Means for solving the Problems]

As a result of the present inventors' studies to achieve the above objects, there has been acquired a novel knowledge that the features of (1) to (5) below allow the easy acquisition of a base film that is less likely to generate cutting fragments in the dicing step and excellent in the expandability and recoverability.

(1) The base film comprises a cutting-fragment suppression layer (A) and an expandable layer (B).

(2) The expandable layer (B) has a laminate structure of a plurality of resin-based sublayers.

(3) Among the plurality of resin-based sublayers, the resin-based sublayer (B1) disposed nearest to the cutting-fragment suppression layer (A) has a stress-relaxation rate R1 of 30% or less after 5 minutes of 10%-stretching.

(4) Among the plurality of resin-based sublayers which constitute the expandable layer (B), the resin-based sublayer (B2) that is at least one of other resin-based sublayers than the resin-based sublayer (B1) has a stress-relaxation rate R2 of 20% or more after 5 minutes of 10%-stretching.

(5) The above stress-relaxation rate R1 is lower than the above stress-relaxation rate R2.

The present invention obtained through the knowledge is as follows.

In a first aspect, the present invention provides a base film of a dicing sheet, the base film comprising a cutting-fragment suppression layer (A) and an expandable layer (B) laminated on one main surface of the cutting-fragment suppression layer (A), the expandable layer (B) having a laminate structure of a plurality of resin-based sublayers, the plurality of resin-based sublayers comprising a resin-based sublayer (B1) that is disposed nearest to the cutting-fragment suppression layer (A) and a resin-based sublayer (B2) that is at least one of other resin-based sublayers than the resin-based sublayer (B1), the resin-based sublayer (B1) having a stress-relaxation rate R1 (unit: %) after 5 minutes of 10%-stretching, the resin-based sublayer (B2) having a stress-relaxation rate R2 (unit: %) after 5 minutes of 10%-stretching, the stress-relaxation rate R1 and the stress-relaxation rate R2 satisfying conditions represented by Expressions (i) to (iii) below, the cutting-fragment suppression layer (A) comprising a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1) (Invention 1).

$$R1 \leq 30\% \qquad (i)$$

$$R2 \geq 20\% \qquad (ii)$$

$$R1 < R2 \qquad (iii)$$

In the above invention (Invention 1), a fracture elongation of a test piece may be 300% or more, wherein the test piece is formed of a resin film that is produced from a resin composition ($\beta1$) for forming the resin-based sublayer (B1), wherein the resin film has a thickness of 100 $\mu$m and a width of 15 mm and also has a shape of Test Piece Type 2 as defined in JIS K7127: 1999 (ISO 5273: 1995), wherein the fracture elongation is measured by performing a tensile test in accordance with JIS K7161: 1994 (ISO 5271: 1993) at a speed of 200 mm/min with a distance between chucks of 100 mm under an environment of 23°C, wherein the tensile test is performed in a state in which the test piece is provided with a cutting of a depth of 20 $\mu$m in a direction parallel to the width direction using a dicing blade (Invention 2).

In the above invention (Invention 1 or 2), a ratio of a thickness of the resin-based sublayer (B1) to a thickness of the expandable layer (B) may be 5% or more and 50% or less (Invention 3).

In the above invention (Invention 1 to 3), a ratio of a thickness of the resin-based sublayer (B2) to a thickness of the expandable layer (B) may be 50% or more and 90% or less (Invention 4).

In the above invention (Invention 1 to 4), a ratio of a thickness of the expandable layer (B) to a thickness of the base film may be 20% or more and 80% or less (Invention 5).

In a second aspect, the present invention provides a dicing sheet comprising: the base film according to any invention described above (Invention 1 to 5); and a pressure sensitive adhesive layer disposed on the cutting-fragment suppression layer (A) of the base film (Invention 6).

In a third aspect, the present invention provides a method of manufacturing the base film according to any invention described above (Invention 1 to 5), the method comprising a coextrusion molding step of obtaining a laminate of the cutting-fragment suppression layer (A) and the expandable layer (B) by coextrusion molding of three or more types of resin compositions that include a resin composition ($\alpha$) for forming the cutting-fragment suppression layer (A), a resin composition ($\beta1$) for forming the resin-based sublayer (B1), and a resin composition ($\beta2$) for forming the resin-based sublayer (B2) (Invention 7).

[Advantageous Effect of the Invention]

According to the present invention, there is provided a base film that is less likely to generate cutting fragments in the dicing step and excellent in the expandability and recoverability even when the expanding amount is large and/or the expanding speed is high. Moreover, according to the present invention, a dicing sheet comprising the above base film is provided. Furthermore, according to the manufacturing method of the present invention, the above base film can be efficiently manufactured.

[Brief Description of Drawing(s)]

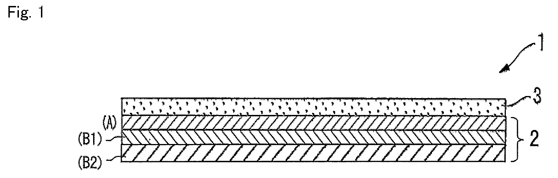

[FIG. 1] FIG. 1 is a cross-sectional view of a dicing sheet according to an embodiment of the present invention.
[Embodiments for Carrying out the Invention]

Description will now be directed to constitutional elements of a dicing sheet according to an embodiment of the present invention and a method of manufacturing the same, etc. 1. Base film

As illustrated in FIG. 1, dicing sheet 1 according to an embodiment of the present invention has a basic structure in which a pressure sensitive adhesive layer 3 is disposed on a base film 2. The base film 2 comprises a cutting-fragment suppression layer (A) and an expandable layer (B) laminated on one main surface of the cutting-fragment suppression layer (A).

The base film 2 may consist of the cutting-fragment suppression layer (A) and the expandable layer (B), or another layer or layers may be laminated thereon. In any case, in the dicing sheet 1 according to an embodiment of the present invention, the pressure sensitive adhesive layer 3 is disposed on a main surface, among two main surfaces of the base film 2, which is located nearer to the cutting-fragment suppression layer (A) than the expandable layer (B).

(1) Cutting-fragment Suppression Layer (A)

The cutting-fragment suppression layer (A) contains a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

The ring-containing resin (a1) and the acyclic olefin-based resin (a2) have different physical characteristics, such as density, tensile elastic modulus, softening point, liquidity temperature, and melt mass flow rate (MFR), based on the difference as to whether or not the polymer that constitutes each resin substantially has a chemical structure comprising a cyclic skeleton (cyclic structure).

In view of stably obtaining an effect of containing the ring-containing resin (a1) (an effect of suppressing the generation of cutting fragments, which may be referred to as a "cutting-fragment suppression effect," hereinafter), the content of the ring-containing resin (a1) in the cutting-fragment suppression layer (A) may preferably be more than 3.0 mass%, further preferably 3.5 mass% or more, and particularly preferably 5.0 mass% or more. On the other hand, in view of suppressing deterioration in the workability of the cutting-fragment suppression layer (A) and the like, the content of the ring-containing resin (a1) in the cutting-fragment suppression layer (A) may preferably be 60 mass% or less, more preferably 55 mass% or less, and further preferably 45 mass% or less. Therefore, it may be particularly preferred that the content of the ring-containing resin (a1) in the cutting-fragment suppression layer (A) is 5.0 mass% or more and 45 mass% or less. In view of more stably obtaining the cutting-fragment suppression effect, it may be preferred that the mass ratio of the content of the ring-containing resin (a1) to the content of the acyclic olefin-based resin (a2) does not fall within a range of 0.8 to 1.25.

The ring-containing resin (a1) and the acyclic olefin-based resin (a2) will now be described in detail.

(1-1) Ring-containing Resin (a1)

The ring-containing resin (a1) is a thermoplastic resin that has at least one type of an aromatic series-based ring and an aliphatic series-based ring.

The aromatic series-based ring refers to a chemical structure that comprises one or more cyclic skeletons (this chemical structure may be referred to as a "cyclic structure" in the present description) in which at least one of the cyclic skeletons has electrons that satisfy the Hückel's rule and are delocalized in a ring form. Such a cyclic skeleton having electrons delocalized in a ring form will be referred to as an "aromatic ring," hereinafter. Aromatic rings are generally classified into monocyclic rings, such as benzene ring, and condensed rings, such as naphthalene ring. Skeleton atoms that form an aromatic ring may consist only of carbon atoms, or may form a hetero ring in which one or more skeleton atoms are other elements than carbon, such as pyridine, furan, and thiophene. Further, the aromatic series-based ring according to the present embodiment encompasses a non-benzenoid aromatic ring such as cyclopentadienide anion. The number of atoms that constitute the skeleton of the aromatic series-based ring according to the present embodiment is not restricted, and one or more functional groups such as methyl group and hydroxyl group may be bonded to one or more atoms that constitute the skeleton. In this case, the functional group or groups bonded to an aromatic ring may form a cyclic structure, such as in tetrahydronaphthalene.

The aliphatic series-based ring refers to a cyclic structure in which none of cyclic skeletons has electrons that are delocalized in a ring form as in the aromatic series-based ring. In other words, the aliphatic series-based ring refers to a cyclic structure that comprises one or more cyclic skeletons other than an aromatic ring. Examples of a cyclic skeleton that forms the aliphatic series-based ring include monocyclic ring such as cyclohexane, crosslinked ring such as norbornane and adamantane, condensed ring such as decalin, and spiro ring such as spiro[4,5]decane. A part of bonds that provide the cyclic skeleton of the aliphatic series-based ring may be an unsaturated bond, such as in norbornene, and a part of atoms that form the cyclic skeleton of the aliphatic series-based ring may be other elements than carbon, such as in tetrahydrofuran. The number of skeleton atoms that constitute the aliphatic series-based ring according to the present embodiment is not restricted. One or more hydrogen atoms bonded to atoms that form the cyclic skeleton of the aliphatic series-based ring may be substituted by one or more functional groups such as methyl group and hydroxyl group. The skeleton atoms may also constitute a carbonyl group, such as in cyclohexanone and other cyclic ketones and $\gamma$-butyrolactone and other lactones.

In the thermoplastic resin (which may be referred to as polymer, hereinafter) that constitutes the ring-containing resin (a1), positions of the aromatic series-based ring and aliphatic series-based ring may freely be selected. They may each form a part of the main chain of the polymer that constitutes the ring-containing resin (a1), or may each be bonded to the main chain or a side chain of the polymer, as a functional group (such as phenyl group and adamantyl group) having a cyclic structure. Examples of polymer in which the aromatic series-based ring forms a part of the main chain include polyester, such as polyethylene terephthalate and polybutylene terephthalate, polyimide, polyamideimide, and polyarylketone. Examples of polymer in which the aliphatic series-based ring forms a part of the main chain include cycloolefin polymer, cycloolefin copolymer, norbornene resin using monomer of norbornene, copolymer using monomers of norbornene and ethylene, copolymer using monomers of tetracyclododecene and ethylene, and copolymer using monomers of dicyclopentadiene and ethylene. Examples of the functional group having a cyclic structure also include a group that comprises a set of rings, such as fluorene group and biphenyl group, in addition to the above phenyl group and adamantyl group.

The aromatic series-based ring and the aliphatic series-based ring may be included in one polymer molecule, in which case the form thereof may be such that both form a part of the main chain, or either one or both are bonded as a functional group or functional groups to the main chain or a side chain. Examples of the latter include those in which the portion that forms a part of the main chain is an aliphatic ring, such as in acenaphthylene copolymer, but which have a naphthalene cyclic structure as a functional group.

Preferred structure of the ring-containing resin (a1) may be a structure in which the aliphatic series-based ring including the ring of a crosslinked cyclic skeleton constitutes at least a part of the main chain of polymer that constitutes the resin. Preferred examples of resin that has such a structure include ring-opening metathesis polymer hydrogenated polymer of norbornene-based monomer (specifically, available as ZEONEX (registered trademark) series from ZEON CORPORATION), copolymer of norbornene and ethylene (specifically, available as TOPAS (registered trademark) series from POLYPLASTICS CO., LTD.), copolymer based on ring-opening polymerization of dicyclopentadiene and tetracyclopentadodecene (specifically, available as ZEONOR (registered trademark) series from ZEON CORPORATION), copolymer of ethylene and tetracyclododecene (specifically, available as APEL (registered trademark) series from Mitsui Chemicals, Inc.), and cyclic olefin resin which includes a polar group and of which the raw materials are dicyclopentadiene and methacrylic ester (specifically, available as ARTON (registered trademark) series from JSR Corporation).

It is also preferred that the ring-containing resin (a1) has a structure in which the aromatic series-based ring constitutes at least a part of the main chain of polymer that constitutes the resin. Preferred examples of resin that has such a structure include styrene-butadiene copolymer (specifically, available as ASAFLEX series from Asahi Kasei Chemicals Corp., CLEAREN series from DENKI KAGAKU KOGYO KABUSHIKI KAISHA, K-Resin series from Chevron Phillips Chemical Company, Styrolux series from BASF, and Finaclear series from Atofina).

One type of polymer may be used to constitute the ring-containing resin (a1), or plural types of polymers may also be blended for use. In the present description, the types of polymers being different refers to a situation in which they are different to such an extent that the physical characteristics and other properties are significantly affected, such as by a state of branch (i.e. architecture of polymer), molecular weight, compounding balance of monomers that constitute the polymer, compositions of monomers that constitute the polymer, and combination thereof.

The ring-containing resin (a1) may have a crosslinked structure. Any type of crosslinking agent may be used to provide a crosslinked structure, and typical examples thereof include organic peroxide, such as dicumyl peroxide, and a compound that has an epoxy group. The crosslinking agent may crosslink polymer molecules of one type that constitute the ring-containing resin (a1), or may also crosslink polymer molecules of different types. Bonding site of the crosslinking agent may freely be designed. Crosslinking may be performed with atoms that constitute the main chain of the polymer which constitutes the ring-containing resin (a1), or may also be performed with atoms that constitute those, such as a side chain and a functional group, other than the main chain. The degree of crosslinking may be freely selected, but if the degree of crosslinking excessively progresses, problems may possibly occur, such as that the workability (in particular moldability) of the cutting-fragment suppression layer (A) which includes the ring-containing resin (a1) unduly deteriorates, the surface property of the cutting-fragment suppression layer (A) unduly degrades, and the brittleness resistance of the cutting-fragment suppression layer (A) deteriorates. Therefore, the degree of crosslinking may have to stay within a range in which such problems do not occur.

The ring-containing resin (a1) may be crystalline or non-crystalline. In view of mixing the ring-containing resin (a1) with the acyclic olefin-based resin (a2) and molding them into a film, the ring-containing resin (a1) may preferably be non-crystalline.

(1-2) Acyclic Olefin-based Resin

The acyclic olefin-based resin (a2) comprises an olefin-based thermoplastic resin other than the above ring-containing resin (a1), i.e. an olefin-based thermoplastic resin that does not substantially have any of an aromatic series-based ring and an aliphatic series-based ring. In the present embodiment, the olefin-based thermoplastic resin is a collective term of thermoplastic resins that are homopolymers or copolymers of which the monomers are olefin and thermoplastic resins that are copolymers of which the monomers are olefin and other molecules than olefin and in which the mass ratio of a portion based on olefin units in the resin after polymerization is 1.0 mass% or more.

Polymer that constitutes the acyclic olefin-based resin (a2) according to the present embodiment may be in a form of linear chain and may have a side chain. The polymer may also have an acyclic functional group, and the type and substitution density thereof may be freely selected. It may be a functional group, such as alkyl group, which has low reactivity or a functional group, such as carboxylic acid group, which has high reactivity.

It may be preferred that the acyclic olefin-based resin (a2) comprises at least one type of acyclic polyolefin (the "acyclic polyolefin" as used in the present description is a collective term of homopolymers and copolymers of which the monomers are olefin that does not have a cyclic structure). When the acyclic olefin-based resin (a2) comprises acyclic polyolefin, the difference in physical characteristics of the acyclic olefin-based resin (a2) and the ring-containing resin (a1) is more significant, so that the cutting-fragment suppression effect can readily be obtained. The degree of branching in the acyclic polyolefin is not particularly limited.

Specific examples of the acyclic olefin-based resin (a2) include polyethylene (linear low-density polyethylene, low-density polyethylene, medium-density polyethylene, and high-density polyethylene), ethylene-based copolymer such as ethylene-olefin copolymer (copolymer of which the monomers are ethylene and olefin other than ethylene), ethylene-vinyl acetate copolymer, ethylene-(meth)acrylic acid copolymer and ethylene-(meth)acrylic ester copolymer, polypropylene, polybutene, and polymethylpentene.

One type of polymer may be used to constitute the acyclic olefin-based resin (a2), or plural types of polymers may also be blended for use.

The acyclic olefin-based resin (a2) may preferably be polyethylene (linear low-density polyethylene, low-density polyethylene, medium-density polyethylene, or high-density polyethylene) or ethylene-based copolymer such as ethylene-olefin copolymer, ethylene-vinyl acetate copolymer, ethylene-(meth)acrylic acid copolymer and ethylene-(meth)acrylic ester copolymer, and more preferably polyethylene (low-density polyethylene, medium-density polyethylene, or high-density polyethylene) or ethylene-olefin copolymer.

Examples of olefin that constitutes the ethylene-olefin copolymer include propylene, 1-butene, 1-hexene, 1-octene, 4-methyl-1-pentene, and α-olefin monomers of which the carbon number is 4 or more and 18 or less.

When the above acyclic olefin-based resin (a2) is ethylene-olefin copolymer, the mass ratio of a portion based on ethylene units in the resin after polymerization may be 1.0 mass% or more. When the mass ratio of the portion based on ethylene units is within the above range, the cutting-fragment suppression effect can be stably obtained.

In view of making large the difference in physical characteristics between those of the acyclic olefin-based resin (a2) and the ring-containing resin (a1) to stably obtain the cutting-fragment suppression effect, the above mass ratio of the portion based on ethylene units in the resin after polymerization may preferably be 20 mass% or more, more preferably 50 mass% or more, and further preferably 70 mass% or more.

The acyclic olefin-based resin (a2) may have a crosslinked structure. Any type of crosslinking agent may be used to provide a crosslinked structure, and typical examples thereof include organic peroxide, such as dicumyl peroxide, and a compound that has an epoxy group. The crosslinking agent may crosslink polymer molecules of one type that constitute the acyclic olefin-based resin (a2), or may also crosslink polymer molecules of different types. Bonding site of the crosslinking agent may freely be designed. The crosslinking agent may be crosslinked with atoms that constitute the main chain of the polymer which constitutes the acyclic olefin-based resin (a2), or may also be crosslinked with atoms that constitute those, such as a side chain and a functional group, other than the main chain. The degree of crosslinking may also be freely selected, but if the degree of crosslinking excessively progresses, the difference in physical characteristics between those of the acyclic olefin-based resin (a2) and the ring-containing resin (a1) will possibly be reduced, so that the function of suppressing the occurrence of cutting fragments may tend to deteriorate. Therefore, the degree of crosslinking may have to stay within a range in which such problems do not occur.

A preferred degree of the thermoplasticity of the acyclic olefin-based resin (a2) according to the present embodiment, when described as a range of the melt mass flow rate (190°C, 2.16 kgf), may be 0.5 g/10 min or more and 10 g/10 min or less, and more preferably 2.0 g/10 min or more and 7 g/10 min or less. In view of achieving an enhanced phase separation structure in the cutting-fragment suppression layer (A), it may be preferred that the melt mass flow rate of the acyclic olefin-based resin (a2) is comparable with or more than that of the ring-containing resin (a1).

The acyclic olefin-based resin (a2) may be crystalline or non-crystalline.

(1-3) Other Components of Cutting-fragment Suppression Layer (A)

The cutting-fragment suppression layer (A) may contain other components in addition to the above ring-containing resin (a1) and acyclic olefin-based resin (a2). Examples of such other components include thermoplastic elastomer resins, such as isoprene rubber, nitrile rubber, acrylic rubber, urethane rubber, butadiene rubber, and copolymers thereof. The content of these other components in the cutting-fragment suppression layer (A) may preferably be set within a range in which the cutting-fragment suppression effect can be obtained in the cutting-fragment suppression layer (A).

(2) Expandable Layer (B)

The expandable layer (B) has a laminate structure of a plurality of resin-based sublayers. The plurality of resin-based sublayers, which constitute the laminate structure, may comprise a resin-based sublayer (B1) that is disposed nearest to the cutting-fragment suppression layer (A) and a resin-based sublayer (B2) that is other than the resin-based sublayer (B1).

(2-1) Resin-based Sublayer (B1)

The resin-based sublayer (B1), which is disposed nearest to the cutting-fragment suppression layer (A), has a stress-relaxation rate R1 of 30% or less after 5 minutes of 10%-stretching. That is, the stress-relaxation rate R1 of the resin-based sublayer (B1) after 5 minutes of 10%-stretching satisfies Expression (i) below.

$$R1 \leq 30\% \qquad (i)$$

According to the features that the resin-based sublayer (B1) satisfies the condition as represented by the above Expression (i), that the resin-based sublayer (B2) satisfies the condition as represented by Expression (ii) to be described later, and that the resin-based sublayer (B1) and the resin-based sublayer (B2) have the relation as represented by Expression (iii) to be described later, a base film 2 excellent in the expandability and recoverability can be obtained. In view of more stably obtaining a base film 2 excellent in the expandability and recoverability, the stress-relaxation rate R1 of the resin-based sublayer (B1) after 5 minutes of 10%-stretching may preferably be 25% or less and further preferably 20% or less. The stress-relaxation rate R1 of the resin-based sublayer (B1) after 5 minutes of 10%-stretching may be anisotropic due to the manufacturing process.

Measurement of the stress-relaxation rate R1 of the resin-based sublayer (B1) after 5 minutes of 10%-stretching may be conducted as below. A resin film is produced from a resin composition ($\beta$1) for forming the resin-based sublayer (B1). The resin film has a thickness of 100 $\mu$m and a width of 15 mm and also has a shape of Test Piece Type 2 as defined in JIS K7127: 1999 (ISO 5273: 1995). This resin film is used as a test piece. The test piece is stretched in accordance with JIS K7161: 1994 (ISO 5271: 1993) at a speed of 200 mm/min with a distance between chucks of 100 mm in a room temperature (23°C), and the stretching is stopped when the test piece is stretched by 10%. After this state of 10%-stretching is maintained for 5 minutes, the stress-relaxation rate R1 (unit: %) after 5 minutes of 10%-stretching can be calculated from a tensile stress (measured load) $F_A$ applied to the test piece at 10%-stretching and a tensile stress (measured load) $F_B$ applied to the test piece when the above 5-minute maintenance is finished, in accordance with Expression (I) below.

$$(F_A - F_B)/F_A \times 100 \qquad (I)$$

When the resin film for providing the above test piece is produced by extrusion molding, the above measurement of the stress-relaxation rate after 5 minutes of 10%-stretching may be performed for both of a test piece produced such that the extrusion direction (MD) when molding the resin film is the tensile direction and a test piece produced such that the perpendicular direction (CD) to the extrusion direction when molding the resin film is the tensile direction. These measured results are averaged, and the averaged value may be the stress-relaxation rate of the test piece of the resin film after 5 minutes of 10%-stretching.

The fracture elongation of a test piece may be 300% or more. The test piece is formed of a resin film that is produced from a resin composition ($\beta$1) for forming the resin-based sublayer (B1). The resin film has a thickness of 100 $\mu$m and a width of 15 mm and also has a shape of Test Piece Type 2 as defined in JIS K7127: 1999 (ISO 5273: 1995). The fracture elongation is measured by performing a tensile test in accordance with JIS K7161: 1994 (ISO 5271: 1993) at a speed of 200 mm/min with a distance between chucks of 100 mm under an environment of 23°C. The tensile test is performed in a state in which the test piece is provided with a cutting of a depth of 20 $\mu$m in a direction parallel to the width direction using a dicing blade. According to the feature that the fracture elongation is 300% or more, a base film 2 excellent in the expandability and recoverability can be more stably obtained. The fracture elongation of the resin-based sublayer (B1) may more preferably be 400% or more and particularly preferably 500% or more. The fracture elongation of the resin-based sublayer (B1) may be anisotropic due to the manufacturing process.

The thickness of the resin-based sublayer (B1) is not particularly limited. However, if the resin-based sublayer (B1) is unduly thin, the meaning of providing the resin-based sublayer (B1) may possibly be lost because the resin-based sublayer (B2) dominates the physical properties of the expandable layer (B) as a whole, while if the resin-based sublayer (B1) is unduly thick, the meaning of providing a resin-based sublayer (B2), which will be described later, may possibly be lost because the resin-based sublayer (B1) dominates the physical properties of the expandable layer (B) as a whole. Therefore, the thickness of the resin-based sublayer (B1) may be appropriately set in consideration of the above. In general, the thickness of the resin-based sublayer (B1) may preferably be 5 $\mu$m or more and 150 $\mu$m or less, more preferably 10 $\mu$m or more and 100 $\mu$m or less, and particularly preferably 15 $\mu$m or more and 50 $\mu$m or less. The ratio of the thickness of the resin-based sublayer (B1) to the thickness of the expandable layer (B) is also not particularly limited. In general, the ratio may preferably be 5% or more and 50% or less, more preferably 15% or more and 45% or less, and particularly preferably 25% or more and 40% or less.

The composition of the resin-based sublayer (B1) is not particularly limited, provided that the above conditions for the stress relaxation are satisfied. The resin that constitutes the resin-based sublayer (B1) may be composed of one type of resin or may also be composed of plural types of resins.

Specific examples of the resin that constitutes the resin-based sublayer (B1) include a linear polyethylene (in the present description, the "linear polyethylene" refers to a copolymer of ethylene and $\alpha$-olefin (alkene which has an ethylenic unsaturated bond at the $\alpha$-site and of which the carbon number is 4 or more)), low-density polyethylene (LDPE, density: 910 kg/m$^3$ or more and less than 930 kg/m$^3$), very-low-density polyethylene (VLDPE, density: 880 kg/m$^3$ or more and less than 910 kg/m$^3$), ethylene-propylene copolymer, ethylene-vinyl acetate copolymer (EVA), ethylene-vinyl acetate-maleic anhydride copolymer, ethylene-(meth)acrylic acid copolymer, ethylene-(meth)acrylic ester copolymer, ethylene-(meth)acrylic ester-maleic anhydride copolymer, polypropylene, copolymer of propylene and $\alpha$-olefin, $\alpha$-olefin polymer (which may be any of homopolymer and copolymer), and styrene-based elastomer. Unless otherwise stated in the present description, the value of "density" refers to a measured value at 23°C.

In a specific example, the resin-based sublayer (B1) may contain a linear polyethylene as the primary resin. In the present description, when one type of resin is used to constitute the resin-based sublayer, the "primary resin" means the resin, and when plural types of resins are used to constitute the resin-based sublayer, the "primary resin" means a resin, among the resins, of which the content (unit: mass%) is highest. Specific structure of the linear polyethylene is not particularly limited. Examples of $\alpha$-olefin as the monomer that provides the linear polyethylene include 1-butene, 1-hexene, and 1-octene. The linear polyethylene may be composed of one type of polymer, or may also be a mixture of plural types of polymers having significantly different physical characteristics.

In view of more stably obtaining a base film 2 excellent in the expandability and recoverability when the resin-based sublayer (B1) contains a linear polyethylene as the primary resin, the resin-based sublayer (B1) may preferably contain 50 mass% or more, more preferably 60 mass% or more, and particularly preferably 70 mass% or more, of the linear polyethylene. The resin-based sublayer (B1) may consist of linear polyethylene.

The density of the linear polyethylene is not particularly limited. In view of more stably obtaining a base film 2 excellent in the expandability and recoverability, etc., the density of the linear polyethylene may preferably be 860 kg/m$^3$ or more and less than 940 kg/m$^3$, more preferably 870 kg/m$^3$ or more and less than 935 kg/m$^3$, further preferably 890 kg/m$^3$ or more and less than 930 kg/m$^3$, and particularly preferably 910 kg/m$^3$ or more and less than 930 kg/m$^3$.

(2-2) Resin-based Sublayer (B2)

The resin-based sublayer (B2) has a stress-relaxation rate R2 of 20% or more after 5 minutes of 10%-stretching, which is defined as in the case of the resin-based sublayer (B1). That is, the stress-relaxation rate R2 satisfies Expression (ii) below.

$$R2 \geq 20\% \qquad (ii)$$

The stress-relaxation rate R1 of the resin-based sublayer (B1) after 5 minutes of 10%-stretching and the stress-relaxation rate R2 of the resin-based sublayer (B2) after 5 minutes of 10%-stretching have the relation as represented by Expression (iii) below.

$$R1 < R2 \qquad (iii)$$

According to the feature that the expandable layer (B) comprises the resin-based sublayer (B2) that satisfies the conditions of the above Expression (ii) and Expression (iii), a base film 2 excellent in the expandability and recoverability can be obtained. In view of more stably having a base film 2 excellent in the expandability and recoverability, the above stress-relaxation rate R2 of the resin-based sublayer (B2) may preferably be 23% or more, further preferably 26% or more, and particularly preferably 30% or more.

The thickness of the resin-based sublayer (B2) is not particularly limited. If the resin-based sublayer (B2) is unduly thin, the meaning of providing the resin-based sublayer (B2) may be lost because the resin-based sublayer (B1) dominates the physical properties of the expandable layer (B) as a whole. If the resin-based sublayer (B2) is unduly thick, the thickness of the resin-based sublayer (B1) is relatively too thin, so that the meaning of providing the resin-based sublayer (B1) may be lost. Therefore, the thickness of the resin-based sublayer (B2) may be appropriately set in consideration of the above. In general, the thickness of the resin-based sublayer (B2) may preferably be 15 $\mu$m or more and 200 $\mu$m or less, more preferably 25 $\mu$m or more and 150 $\mu$m or less, and particularly preferably 35 $\mu$m or more and 100 $\mu$m or less. The ratio of the thickness of the resin-based sublayer (B2) to the thickness of the expandable layer (B) is also not particularly limited. In general, the ratio may preferably be 50% or more and 95% or less, more preferably 50% or more and 90% or less, further preferably 55% or more and 85% or less, furthermore preferably 55% or more and 80% or less, particularly preferably 60% or more and 75% or less, and most preferably 60% or more and 70% or less.

The composition of the resin-based sublayer (B2) is not particularly limited, provided that the above conditions for the stress relaxation are satisfied. The resin that constitutes the resin-based sublayer (B2) may be composed of one type of resin or may also be composed of plural types of resins.

Specific examples of the resin that constitutes the resin-based sublayer (B2) include low-density polyethylene (LDPE, density: 910 kg/m$^3$ or more and less than 930 kg/m$^3$), very-low-density polyethylene (VLDPE, density: 880 kg/m$^3$ or more and less than 910 kg/m$^3$), ethylene-propylene copolymer, ethylene-vinyl acetate copolymer (EVA), ethylene-vinyl acetate-maleic anhydride copolymer, ethylene-(meth)acrylic acid copolymer, ethylene-(meth)acrylic ester copolymer, ethylene-(meth)acrylic ester-maleic anhydride copolymer, polypropylene, copolymer of propylene and $\alpha$-olefin, and styrene-based elastomer.

Specific examples of (meth) acrylic ester used to form the ethylene-(meth)acrylic ester copolymer include methyl (meth)acrylate, ethyl (meth)acrylate, butyl (meth)acrylate, and hydroxyethyl acrylate.

In a specific example, the resin-based sublayer (B2) may contain ethylene-(meth)acrylic acid copolymer or ethylene-(meth)acrylic ester copolymer (these copolymers may be collectively referred to as "ethylene-(meth)acrylic acid series copolymer" in the present description) as the primary resin. According to the feature that the expandable layer (B) comprises such a resin-based sublayer (B2), a base film 2 excellent in the expandability and recoverability can be obtained.

The molar ratio of constituent units originated from ethylene to the entire constituent units possessed by the ethylene- (meth) acrylic acid series copolymer may preferably be 89% or more, more preferably 90% or more, and particularly preferably 91% or more. The ethylene-(meth)acrylic acid series copolymer, which is the primary resin of the resin-based sublayer (B2), may be composed of one type of polymer or may also be composed of plural types of polymers.

In the present description, the "styrene-based elastomer," which is one type of resin that may be contained in the resin-based sublayer (B2), refers to a copolymer that contains a structural unit originated from styrene or its derivative (styrene-based compound), i.e. a material that has elasticity, like rubber, within a temperature region including an ordinary temperature and also has thermoplasticity. Examples of the styrene-based elastomer include a styrene-conjugate diene copolymer and a styrene-olefin copolymer. Specific examples of the styrene-conjugate diene copolymer include: non-hydrogenated styrene-conjugate diene copolymers, such as styrene-butadiene copolymer, styrene-butadiene-styrene copolymer (SBS), styrene-butadiene-butylene-styrene copolymer, styrene-isoprene copolymer, styrene-isoprene-styrene copolymer (SIS) and styrene-ethylene-isoprene-styrene copolymer; and hydrogenated styrene-conjugate diene copolymers, such as styrene-ethylene/propylene-styrene copolymer (SEPS, hydrogenated product of styrene-isoprene-styrene copolymer) and styrene-ethylene-butylene-styrene copolymer (SEBS, hydrogenated product of styrene-butadiene copolymer). Examples of the commercially available products in the industrial field include Tufprene (available from Asahi Kasei Corp.), Kraton (available from Kraton Polymer Japan), Sumitomo TPE-SB (available from Sumitomo Chemical Company, Limited), Epofriend (available from Daicel Corporation), Rabalon (available from Mitsubishi Chemical Corporation), Septon (available from KURARAY CO., LTD.), and Tuftec (available from Asahi Kasei Corp). The styrene-based elastomer may be composed of one type of resin or may also be a mixture of plural types of resins.

(2-3) Other Features of Expandable Layer (B), etc.

The expandable layer (B) may consist of the above resin-based sublayer (B1) and resin-based sublayer (B2). Provided that the expandable layer (B) can achieve a predetermined function, the expandable layer (B) may further comprise a sublayer other than the resin-based sublayer (B1) and the resin-based sublayer (B2).

(3) Other Features of Base Film 2

The thickness of the base film 2 according to the present embodiment may ordinarily be 40 μm or more and 300 μm or less and preferably 60 μm or more and 200 μm or less. The thickness of the cutting-fragment suppression layer (A) may ordinarily be 20 μm or more and 120 μm or less and preferably 40 μm or more and 100 μm or less. When the cutting-fragment suppression layer (A) has a thickness as the above, the cutting-fragment suppression effect can be more stably obtained. The thickness of the expandable layer (B) may ordinarily be 20 μm or more and 280 μm or less and preferably 40 μm or more and 200 μm or less. If the expandable layer (B) is unduly thin, a base film 2 excellent in the expandability and recoverability may not be obtained even when the resin-based sublayer (B1) and resin-based sublayer (B2) that constitute the expandable layer (B) have the previously-described mechanical characteristics. It may be preferred that the ratio of the thickness of the expandable layer (B) to the thickness of the base film 2 is 20% or more and 80% or less. Unduly low value of the ratio causes the expandable layer (B) to be excessively thin, and a base film 2 excellent in the expandability and recoverability may not be readily obtained as the above. On the other hand, unduly high value of the above ratio causes the cutting-fragment suppression layer (A) to be excessively thin, and the cutting-fragment suppression effect may not be stably obtained.

It may also be preferred that the tensile elastic modulus of the base film 2 according to the present embodiment is 80 MPa or more and 300 MPa or less. If the tensile elastic modulus is less than 80 MPa, such a soft base film 2 may come loose when a wafer is attached to the dicing sheet 1 and they are then fixed to a ring frame, and the loosening may cause the transportation error. If, on the other hand, the tensile elastic modulus of the base film 2 exceeds 300 MPa, problems may possibly occur, such as that the dicing sheet 1 itself is detached from the ring frame because the load applied during the expanding step is large.

(4) Method of Manufacturing Base Film 2

Method of manufacturing the base film 2 is not particularly limited. Examples thereof include: melt extrusion method, such as T-die method and round-die method; calender method; and solution method, such as dry method and wet method, and any method may be employed. In consideration that the ring-containing resin (a1) and acyclic olefin-based resin (a2) which are contained in the cutting-fragment suppression layer (A), the linear polyethylene and styrene-based polymer which may be contained in the resin-based sublayer (B1) of the expandable layer (B), and the ethylene-(meth)acrylic acid series copolymer which may be contained in the resin-based sublayer (B2) of the expandable layer (B) are all thermoplastic resins, and in view of manufacturing the base film 2 at high productivity, it may be preferred to employ the melt extrusion method or the calender method. When, among them, the melt extrusion method is employed for manufacturing, components that constitute the cutting-fragment suppression layer (A) and components that constitute the expandable layer (B) may be separately kneaded, and film forming may be performed using a known extruder directly from the obtained kneaded components or from pellets which are produced from the obtained kneaded components.

2. Other Constitutional Elements of Dicing Sheet 1

Examples of other constitutional elements than the base film 2 of the dicing sheet 1 include: a pressure sensitive adhesive layer 3 that is disposed on a main surface, among two main surfaces of the base film 2, which is located nearer to the cutting-fragment suppression layer (A) than the expandable layer (B); and a release sheet for protecting the surface of the pressure sensitive adhesive layer 3 opposite to the side facing the base film 2, i.e. the surface for being attached to a cut object.

(1) Pressure Sensitive Adhesive Layer 3

Examples of pressure sensitive adhesive that is used to constitute the pressure sensitive adhesive layer 3 include, but are not particularly limited to, those which are usually used for dicing sheets, such as rubber-based, acrylic-based, silicone-based and polyvinyl ether-based pressure sensitive adhesives, and which may be energy ray curable-type (including ultraviolet curable-type), heat foamable or heat curable-type pressure sensitive adhesive. When the dicing sheet 1 according to the present embodiment is used as a dicing/die-bonding sheet, adhesives may be used, such as pressure sensitive adhesive, thermoplastic adhesive and B-stage adhesive, which have both the wafer fixing function and the die adhesion function.

The thickness of the pressure sensitive adhesive layer 3 may ordinarily be 3 μm to 100 μm and preferably about 5 μm to 80 μm.

(2) Release Sheet

The release sheet for protecting the pressure sensitive adhesive layer 3 may be freely selected.

Examples of the release sheet to be used include polyethylene film, polypropylene film, polybutene film, polybutadiene film, polymethylpentene film, polyvinyl chloride film, vinyl chloride copolymer film, polyethylene terephthalate film, polyethylene naphthalate film, polybutylene terephthalate film, polyurethane film, ethylene-vinyl acetate film, ionomer resin film, ethylene-(meth)acrylic acid copolymer film, ethylene-(meth)acrylic ester copolymer film, polystyrene film, polycarbonate film, polyimide film, and fluorine resin film. Crosslinked films thereof may also be used. Laminate film obtained by laminating a plurality of such films may also be used.

It may be preferred that the release surface (in particular the surface to be in contact with the pressure sensitive adhesive layer 3) of the above release sheet is subjected to release treatment. Examples of release agent to be used for the release treatment include alkyd-based, silicone-based, fluorine-based, unsaturated polyester-based, polyolefin-based and wax-based release agents.

The thickness of the release sheet is not particularly limited and may ordinarily be about 20 μm to 150 μm.

3. Method of Manufacturing Dicing Sheet 1

Method of manufacturing the dicing sheet 1 comprising a laminate of the above base film 2 and pressure sensitive adhesive layer 3 and other layers, such as release sheet, which may be used as necessary, is not particularly limited.

Some exemplary methods of manufacturing the dicing sheet 1 may be as follows.

(i) The base film 2 is formed and the pressure sensitive adhesive layer 3 is formed thereon, and if necessary a release sheet is further laminated thereon. In this operation, the method of forming the pressure sensitive adhesive layer 3 may be freely selected.

One exemplary method of forming the pressure sensitive adhesive layer 3 may be as follows. A coating agent is prepared which contains a pressure sensitive adhesive composition for forming the pressure sensitive adhesive layer 3 and if necessary further contains some solvent. The main surface, among two main surfaces of the base film 2, which is located nearer to the cutting-fragment suppression layer (A) than the expandable layer (B), is coated with the coating agent using a coater, such as a roll coater, knife coater, knife-over-roll coater, air knife coater, die coater, bar coater, gravure coater and curtain coater. The layer of the coating agent on the base film 2 is dried to form the pressure sensitive adhesive layer 3. In an exemplary method other than the above method, a pressure sensitive adhesive layer 3 separately formed in a sheet-like form may be attached to the base film 2.

(ii) The pressure sensitive adhesive layer 3 is formed on the release sheet, and the base film 2 is laminated on the pressure sensitive adhesive layer 3 by applying pressure. In this operation, the method of forming the pressure sensitive adhesive layer 3 may be freely selected as the above.

In an exemplary method other than the above methods of (i) and (ii), a pressure sensitive adhesive layer 3 separately formed in a sheet-like form may be applied to the base film 2.

4. Method of Manufacturing Chips

A method of manufacturing chips using the dicing sheet according to the present embodiment will be described.

First, the surface of the pressure sensitive adhesive layer 3 of the dicing sheet 1 according to the present embodiment is attached to one main surface of a cut object. When the surface of the pressure sensitive adhesive layer 3 is protected by a release sheet, the release sheet may be removed to expose the surface of the pressure sensitive adhesive layer 3. When an attaching apparatus is used to attach the dicing sheet 1 to the cut object, the apparatus may usually attach the dicing sheet 1 also to a ring frame. In this way, a stack structure can be obtained in which the cut object attached to the dicing sheet 1 is located in an opening part of the ring frame.

Subsequently, the above stack structure is placed on a dicing table, and the dicing process is performed from the surface of the cut object opposite to the side facing the pressure sensitive adhesive layer 3 to divide the cut object into individual pieces (dicing step) . Through this dicing step, a plurality of chips obtained by dividing the cut object into individual pieces may be disposed on the dicing sheet 1 in a state in which the chips are close to one another. In this state, when each chip is picked up, the chip may possibly come into contact with the adjacent chips, which may increase the possibility of troubles that the pickup is not appropriately performed and the quality issues occur, such as crack of the chip or chips. Accordingly, an expanding step for applying tensile force to the dicing sheet 1 may be performed after the dicing step. The applied tensile force to the dicing sheet 1 allows the dicing sheet 1 to elongate in a direction or directions on the main surface to increase the distance between the chips, and the subsequent pickup of the chips will be easily performed.

As previously described, the elongation amount of the dicing sheet in the expanding step (expanding amount) recently tends to increase. Specifically, the expanding amount, which is ordinarily defined as a pull-down amount of the dicing sheet, may be increased from about 10 mm to about 20-40 mm in recent years. Even in such a case, the fracture of the base film 2 is less likely to occur when using the dicing sheet 1 comprising the base film 2 according to the present embodiment. Therefore, when the dicing sheet 1 comprising the base film 2 according to the present embodiment is used, troubles may not readily occur in the expanding step even with an increased expanding amount.

In addition, the elongation speed of the dicing sheet in the expanding step (expanding speed) also recently tends to increase. Specifically, the expanding amount, which would conventionally have been about 10 mm/sec, may be increased to about 20-40 mm/sec in recent years. Even in such a case, the fracture of the base film 2 is less likely to occur when using the dicing sheet 1 comprising the base film 2 according to the present embodiment. Therefore, when the dicing sheet 1 comprising the base film 2 according to the present embodiment is used, troubles may not readily occur in the expanding step even with an increased expanding speed.

Furthermore, a preferred example of the base film 2 according to the present embodiment is also excellent in the recoverability. In the dicing sheet 1 comprising the base film 2 excellent in the recoverability, the loosening amount (the displacement distance in the vertical direction of the bottom surface of the dicing sheet 1 with reference to the lower side surface of a portion of the dicing sheet which is attached to the ring frame) after the expanding step may be small, or the loosening amount may readily be reduced by heating at a temperature of about 50°C to 70°C for 30 seconds to several minutes. If the loosening amount is unduly large, the loosened bottom surface of the dicing sheet or the vicinity thereof will readily collide with foreign materials during transportation, thus leading to poor handling ability when using the dicing sheet.

The embodiments heretofore explained are described to facilitate understanding of the present invention and are not described to limit the present invention. Therefore, it is intended that the elements disclosed in the above embodiments include all design changes and equivalents to fall within the technical scope of the present invention.

[Examples]

Hereinafter, the present invention will be described further specifically with reference to examples, etc., but the scope of the present invention is not limited to these examples, etc.

<Example 1>

(Production of Base Film)

A resin composition ($\alpha$) for forming the cutting-fragment suppression layer (A) was obtained through melting and kneading 30 mass parts of cycloolefin copolymer (product name: TOPAS (registered trademark) 8007 available from POLYPLASTICS CO., LTD.) as the ring-containing resin (a1) and 70 mass parts of low-density polyethylene (product name: SUMIKATHENE (registered trademark) L705 available from Sumitomo Chemical Company, Limited) as the acyclic olefin-based resin (a2) at 210°C using a biaxial kneading machine (Labo-plastomill available from Toyo Seiki Seisaku-sho, LTD).

A resin composition ($\beta$1) for forming the resin-based sublayer (B1) was obtained through melting and kneading 100 mass parts of linear polyethylene (product name: EVOLUE (registered trademark) SP2040 available from Prime Polymer Co., Ltd.) at 210°C using a biaxial kneading machine (Labo-plastomill available from Toyo Seiki Seisaku-sho, LTD).

A resin composition ($\beta$2) for forming the resin-based sublayer (B2) was obtained through melting and kneading 100 mass parts of ethylene-methacrylic acid copolymer (product name: NUCREL (registered trademark) N0903HC available from DUPONT-MITSUI POLYCHEMICALS CO., LTD.) as one type of the ethylene-(meth)acrylic acid series copolymer at 210°C using a biaxial kneading machine (Labo-plastomill available from Toyo Seiki Seisaku-sho, LTD).

The resin composition ($\alpha$), resin composition ($\beta$1) and resin composition ($\beta$2) thus obtained were subjected to coextrusion molding using a compact T-die extruder (Labo-plastomill available from Toyo Seiki Seisaku-sho, LTD). As a result, a base film of a thickness of 100 μm was obtained, comprising the resin-based sublayer (B1) of a thickness of 20 μm, the cutting-fragment suppression layer (A) of a thickness of 40 μm laminated on one main surface of the resin-based sublayer (B1), and the resin-based sublayer (B2) of a thickness of 40 μm laminated so as to be in contact with the other main surface of the resin-based sublayer (B1), i.e. comprising the cutting-fragment suppression layer (A) of a thickness of 40 μm and the expandable layer (B) of a thickness of 60 μm laminated on one main surface of the cutting-fragment suppression layer (A), the expandable layer (B) consisting of the resin-based sublayer (B1) of a thickness of 20 μm and the resin-based sublayer (B2) of a thickness of 40 μm.

(Preparation of Pressure Sensitive Adhesive)

An energy ray curable-type pressure sensitive adhesive composition was obtained through mixing 100 mass parts of copolymer (Mw: 500, 000) provided by copolymerization of 95 mass parts of n-butyl acrylate and 5 mass parts of acrylic acid, 120 mass parts of urethane acrylate oligomer (Mw: 8,000), 5 mass parts of isocyanate-based curing agent (CORONATE L available from NIPPON POLYURETHANE INDUSTRY CO., LTD.), and 4 mass parts of photopolymerization initiator (IRGACURE 184 available from Ciba Specialty Chemicals Inc).

The energy ray curable-type pressure sensitive adhesive composition thus obtained was applied onto a release film treated with silicone (SP-PET3811(S) available from LINTEC Corporation) to have a film thickness after drying of 10 μm, and dried under 100°C for 1 minute to form a laminate comprising the pressure sensitive adhesive layer and the release film. This laminate was then attached to the main surface of the above base film at the side of the cutting-fragment suppression layer (A) to transfer the pressure sensitive adhesive layer of the laminate to the base film, and a dicing sheet was thus obtained.

<Example 2>

A dicing sheet was manufactured in the same manner as in Example 1 except that the resin type used to form the resin composition (β1) was another linear polyethylene (product name: UMERIT (registered trademark) 2040F available from UBE-MARUZEN POLYETHYLENE).

<Example 3>

A dicing sheet was manufactured in the same manner as in Example 1 except that the resin type used to form the resin composition (β2) was ethylene-methyl methacrylate copolymer (product name: ACRYFT (registered trademark) WD301 available from Sumitomo Chemical Company, Limited) as another type of the ethylene-(meth)acrylic acid series copolymer.

<Example 4>

A dicing sheet was manufactured in the same manner as in Example 1 except that the resin type used to form the resin composition (β1) was styrene-based polymer (TUFTEC (registered trademark) H1052 available from Asahi Kasei Corp).

<Example 5>

A dicing sheet was manufactured in the same manner as in Example 2 except that the thicknesses of the resin-based sublayer (B1) and resin-based sublayer (B2) were each 30μm.

<Example 6>

A dicing sheet was manufactured in the same manner as in Example 1 except that the resin type used to form the resin composition (β1) was another linear polyethylene (product name: UMERIT (registered trademark) 3540F available from UBE-MARUZEN POLYETHYLENE), the thickness of the resin-based sublayer (B1) was 10 μm, and the thickness of the resin-based sublayer (B2) was 50 μm.

<Comparative Example 1>

A dicing sheet was manufactured in the same manner as in Example 1 except that the resin type used to form the resin composition (β1) was substituted with the same type of material as that for the resin composition (β2) in Example 1.

<Comparative Example 2>

A dicing sheet was manufactured in the same manner as in Example 1 except that the resin type used to form the resin composition (2) was substituted with the same type of material as that for the resin composition (β1) in Example 1.

<Comparative Example 3>

A dicing sheet was manufactured in the same manner as in Example 1 except that the resin type used to form the resin composition (β2) and the resin type used to form the resin composition (β1) were exchanged with each other.

<Comparative Example 4>

A dicing sheet was manufactured in the same manner as in Example 1 except that the resin type used to form the resin composition (β1) was another linear polyethylene (product name: EVOLUE (registered trademark) SP4030 available from Prime Polymer Co., Ltd).
The conditions of the above examples and comparative examples are collectively listed in Tables 1-1 and 1-2.
In the tables, the linear polyethylene used in Examples 1 and 3 and Comparative Examples 2 and 3 is denoted by "Linear polyethylene 1, " the linear polyethylene used in Examples 2 and

5 is denoted by "Linear polyethylene 2, " the linear polyethylene used in Example 6 is denoted by "Linear polyethylene 3," the linear polyethylene used in Comparative Example 4 is denoted by "Linear polyethylene 4," the ethylene-(meth)acrylic acid series copolymer used in Examples 1, 2 and 4 to 6 and Comparative Examples 1, 3 and 4 is denoted by "Ethylene- (meth) acrylic acid series copolymer 1, " and the ethylene- (meth) acrylic acid series copolymer used in Example 3 is denoted by "Ethylene-(meth)acrylic acid series copolymer 2."

[Table 1]

| | Cutting-fragment suppression layer (A) | | | Expandable layer (B) | | |
|---|---|---|---|---|---|---|
| | Ring-containing resin (a1) | Acyclic olefin-based resin (a2) | Mass ratio (a1) (a2) | Resin-based sublayer (B1) | Resin-based sublayer (B2) | Ratio of thickness (B1) : (B2) |
| Example 1 | Cycloolefin copolymer | Low-density polyethylene | 30 : 70 | Linear polyethylene 1 | Ethylene-(meth)acrylic acid series copolymer 1 | 20:40 |
| Example 2 | | | | Linear polyethylene 2 | | |
| Example 3 | | | | Linear polyethylene 1 | Ethylene-(meth)acrylic acid series copolymer 2 | |
| Example 4 | | | | Styrene-based polymer | Ethylene-(meth)acrylic acid series copolymer 1 | |
| Example 5 | | | | Linear polyethylene 2 | | 30:30 |
| Example 6 | | | | Linear polyethylene 3 | | 10:50 |
| Comparative Example 1 | | | | Ethylene-(meth)acrylic acid series copolymer 1 | | 20:40 |
| Comparative Example 2 | | | | Linear polyethylene 1 | Linear polyethylene 1 | |
| Comparative Example 3 | | | | Ethylene-(meth)acrylic acid series copolymer 1 | | |
| Comparative Example 4 | | | | Linear polyethylene 4 | Ethylene-(meth)acrylic acid series copolymer 1 | |

<Exemplary Test 1> (Measurement of Stress Relaxation Rate)

A single-layer resin film (B1') and a single-layer resin film (B2') each having a thickness of 100 $\mu$m were produced in the same method as that for the above base films using, respectively, the resin composition ($\beta$1) for forming the resin-based sublayer (B1) and the resin composition ($\beta$2) for forming the resin-based sublayer (B2) as prepared in each of the examples and comparative examples.

Each of the resin film (B1') produced from the resin composition ($\beta$1) and the resin film (B2') produced from the resin composition ($\beta$2) was cut into a test piece having a width of 15 mm and a length of 150 mm also having a shape of Test Piece Type 2 as defined in JIS K7127: 1999 (ISO 5273: 1995). For the test piece thus obtained, the stress-relaxation rate (unit: %) after 5 minutes of 10%-stretching was measured at 23°C in accordance with JIS K7161: 1994 (ISO 5271: 1993). Specifically, after the distance between chucks was set at 100 mm using a tensile tester (Autograph AG-IS 500N available from SHIMADZU CORPORATION), the above test piece was stretched at a speed of 200 mm/min and stopped at 10% stretching (distance between chucks: 110 mm) to perform a tensile test. The stress relaxation rate at that time was calculated as $(F_A-F_B)/F_A \times 100$ (%) using a measured load (tensile stress) $F_A$ at the time of 10%-stretching and a measured load (tensile stress) $F_B$ after 5 minutes from stopping the stretching. The above measurement of the stress-relaxation rate after 5 minutes of 10%-stretching was performed for both of a test piece produced such that the extrusion direction (MD) when molding the resin film would be the tensile direction and a test piece produced such that the perpendicular direction (CD) to the extrusion direction when molding the resin film would be the tensile direction, and the average value of these measured results was employed as the stress-relaxation rate of the test piece of the resin film after 5 minutes of 10%-stretching. The stress relaxation rate R1 and stress relaxation rate R2 obtained in the above manner are listed in Table 2.

<Exemplary Test 2> (Measurement of Fracture Elongation)

In the same production method as that for Exemplary Test 1, each test piece of the resin film (B1') was produced, having a length in the longitudinal direction of 140 mm, a width of 15 mm and a thickness of 100 $\mu$m and also having a shape of Test Piece Type 2 as defined in JIS K7127: 1999 (ISO 5273: 1995). The test piece thus obtained was provided with a cutting of a depth of 20 $\mu$m in a direction parallel to the width direction and at the central portion in the longitudinal direction of the test piece using a dicing blade. Thereafter, a tensile test was performed as in Exemplary Test 1 at a speed of 200 mm/min with a distance between chucks of 100 mm to measure the fracture elongation (unit: %). Specifically, the tensile test was performed at a speed of 200 mm/min, and the fracture elongation was obtained through dividing the distance between chucks when each test piece was fractured by the distance between chucks before the test, i.e. 100 mm. The measurement of the fracture elongation was performed for both of the extrusion direction (MD) when molding the resin film (B1') and the perpendicular direction (CD) thereto. Respective results are listed in Table 2.

<Exemplary Test 3> (Evaluation of Tear Property)

In the same production method as that for Exemplary Test 1, each test piece of the resin film (B1') or resin film (B2') was produced, having a length in the longitudinal direction of 140 mm, a width of 15 mm and a thickness of 100 $\mu$m and also having a shape of Test Piece Type 2 as defined in JIS K7127: 1999 (ISO 5273: 1995). The test piece thus obtained was provided with a cutting of a depth of 20 $\mu$m in a direction parallel to the width direction and at the central portion in the longitudinal direction of the test piece using a dicing blade. Thereafter, a tensile test was performed as in Exemplary Test 1 at a speed of 200 mm/min with a distance between chucks of 100 mm to calculate the fracture elongation. On the basis of the obtained fracture elongation, the tear property was evaluated in accordance with the criteria below.

    A: the fracture elongation was 300% or more
    B: the fracture elongation was less than 300%

The case of A was determined to be good in the tear property, and the case of B was determined to be bad in the tear property. Results are listed in Table 2.

<Exemplary Test 4> (Evaluation of Expandability)

After attaching a 6-inch silicon wafer to the pressure sensitive adhesive layer of the dicing sheet manufactured in each of the examples and comparative examples, the dicing sheet was mounted on a flat frame and a full-cut dicing process was performed for the wafer on the dicing sheet using a diamond blade of 20 $\mu$m thickness to obtain chips of 10 mm $\times$ 10 mm square.

An expanding step was then performed by pulling down the dicing sheet, in a state in which the chips were attached to one main surface of the dicing sheet, by 10 mm at a speed of 300 mm/min (Condition 1) or by 30 mm at a speed of 300 mm/min (Condition 2) using an expanding jig (Die Bonder available from NEC Machinery Corporation, product name: CSP-100VX). With regard to the dicing sheet after the expanding step, the presence or absence of the occurrence of fracture was observed. During the observation, evaluation was conducted in accordance with the criteria below.

A: fracture was not confirmed under both of the two conditions

B: fracture was confirmed under either one condition C: fracture was confirmed under both of the two conditions
A and B were determined to be good, and C was determined to be bad. Results are listed in Table 2.

<Exemplary Test 5> (Evaluation of recoverability)

Each dicing sheet after performing the expanding step under Condition 1 in Exemplary Test 4 was supplied with warm air of a temperature within a range of 50°C to 70°C for 1 minute using a dryer. Thereafter, the loosening amount of the dicing sheet (the displacement distance in the vertical direction of the bottom surface of the dicing sheet with reference to a portion of the dicing sheet attached to the ring frame) was measured. With regard to the measured loosening amount, evaluation was conducted in accordance with the criteria below.

A: loosening amount was 6 mm or less
B: loosening amount was more than 6 mm and 10 mm or less
C: loosening amount was more than 10 mm

A and B were determined to be good, and C was determined to be bad. Results are listed in Table 2.

[Table 2]

| | Resin-based sublayer (B1') | | | Resin-based sublayer (B2') | Evaluation of tear property | Evaluation of expandability | Evaluation of recoverability |
|---|---|---|---|---|---|---|---|
| | Stress-relaxation rate R1 (%) | Fracture elongation (MPa) | | Stress-relaxation rate R2 (%) | | | |
| | | MD | CD | | | | |
| Example 1 | 17 | 520 | 547 | 32 | A | A | A |
| Example 2 | 16 | 562 | 537 | 32 | A | A | A |
| Example 3 | 17 | 520 | 547 | 21 | A | A | A |
| Example 4 | 21 | 610 | 610 | 32 | A | B | A |
| Example 5 | 16 | 562 | 537 | 32 | A | A | A |
| Example 6 | 23 | 491 | 479 | 32 | A | A | A |
| Comparative Example 1 | 32 | 71 | 293 | 32 | B | C | A |
| Comparative Example 2 | 17 | 520 | 547 | 17 | A | A | C |
| Comparative Example 3 | 32 | 71 | 293 | 17 | B | C | C |
| Comparative Example 4 | 45 | 491 | 479 | 32 | A | A | C |

EP 3 073 515 A1

As apparent from Table 2, the dicing sheet manufactured in each of the examples is found to exhibit the cutting-fragment suppression effect, and the fracture is less likely to occur after the expanding step.

[Industrial Applicability]

The base film for a dicing sheet according to the present invention can be preferably used as a constitutional member of a dicing sheet used when dicing semiconductor wafers, various types of packages, etc.

[Description of Reference Numerals]

1... Dicing sheet
2... Base film

    (A) Cutting-fragment suppression layer
    (B) Expandable layer

        (B1) Resin-based sublayer
        (B2) Resin-based sublayer

3... Pressure sensitive adhesive layer

**Claims**

1.  A base film of a dicing sheet, the base film comprising a cutting-fragment suppression layer (A) and an expandable layer (B) laminated on one main surface of the cutting-fragment suppression layer (A),
    the expandable layer (B) having a laminate structure of a plurality of resin-based sublayers,
    the plurality of resin-based sublayers comprising a resin-based sublayer (B1) that is disposed nearest to the cutting-fragment suppression layer (A) and a resin-based sublayer (B2) that is at least one of other resin-based sublayers than the resin-based sublayer (B1),
    the resin-based sublayer (B1) having a stress-relaxation rate R1 (unit: %) after 5 minutes of 10%-stretching,
    the resin-based sublayer (B2) having a stress-relaxation rate R2 (unit: %) after 5 minutes of 10%-stretching,
    the stress-relaxation rate R1 and the stress-relaxation rate R2 satisfying conditions represented by Expressions (i) to (iii) below,
    the cutting-fragment suppression layer (A) comprising a ring-containing resin (a1) that is a thermoplastic resin having at least one type of an aromatic series-based ring and an aliphatic series-based ring and an acyclic olefin-based resin (a2) that is an olefin-based thermoplastic resin other than the ring-containing resin (a1).

$$R1 \leq 30\% \qquad (i)$$

$$R2 \geq 20\% \qquad (ii)$$

$$R1 < R2 \qquad (iii)$$

2.  The base film as recited in claim 1, wherein a fracture elongation of a test piece is 300% or more, wherein the test piece is formed of a resin film that is produced from a resin composition ($\beta$1) for forming the resin-based sublayer (B1), wherein the resin film has a thickness of 100 $\mu$m and a width of 15 mm and also has a shape of Test Piece Type 2 as defined in JIS K7127: 1999 (ISO 5273: 1995), wherein the fracture elongation is measured by performing a tensile test in accordance with JIS K7161: 1994 (ISO 5271: 1993) at a speed of 200 mm/min with a distance between chucks of 100 mm under an environment of 23°C, wherein the tensile test is performed in a state in which the test piece is provided with a cutting of a depth of 20 $\mu$m in a direction parallel to the width direction using a dicing blade.

3. The base film as recited in claim 1 or 2, wherein a ratio of a thickness of the resin-based sublayer (B1) to a thickness of the expandable layer (B) is 5% or more and 50% or less.

4. The base film as recited in any one of claims 1 to 3, wherein a ratio of a thickness of the resin-based sublayer (B2) to a thickness of the expandable layer (B) is 50% or more and 90% or less.

5. The base film as recited in any one of claims 1 to 4, wherein a ratio of a thickness of the expandable layer (B) to a thickness of the base film is 20% or more and 80% or less.

6. A dicing sheet comprising: the base film as recited in any one of claims 1 to 5; and a pressure sensitive adhesive layer disposed on the cutting-fragment suppression layer (A) of the base film.

7. A method of manufacturing the base film as recited in any one of claims 1 to 5,
the method comprising a coextrusion molding step of obtaining a laminate of the cutting-fragment suppression layer (A) and the expandable layer (B) by coextrusion molding of three or more types of resin compositions that include a resin composition ($\alpha$) for forming the cutting-fragment suppression layer (A), a resin composition ($\beta1$) for forming the resin-based sublayer (B1), and a resin composition ($\beta2$) for forming the resin-based sublayer (B2).

Fig. 1

**INTERNATIONAL SEARCH REPORT**

| International application No. |
| --- |
| PCT/JP2014/079617 |

A. CLASSIFICATION OF SUBJECT MATTER
*H01L21/301*(2006.01)i, *C09J7/02*(2006.01)i

According to International Patent Classification (IPC) or to both national classification and IPC

B. FIELDS SEARCHED

Minimum documentation searched (classification system followed by classification symbols)
H01L21/301, C09J7/02

Documentation searched other than minimum documentation to the extent that such documents are included in the fields searched
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-36374 A (Mitsui Chemicals, Inc.), 23 February 2012 (23.02.2012), paragraphs [0040] to [0061], [0099], [0100] (Family: none) | 1-7 |
| A | JP 2009-164181 A (Gunze Ltd.), 23 July 2009 (23.07.2009), paragraphs [0025] to [0056] (Family: none) | 1-7 |
| A | JP 2000-150432 A (Lintec Corp.), 30 May 2000 (30.05.2000), paragraphs [0011] to [0017] & EP 999250 A2 & DE 69915978 D & TW 429461 B & SG 106569 A & KR 10-2000-0035230 A & CN 1255522 A | 1-7 |

☒ Further documents are listed in the continuation of Box C.  ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 03 December 2014 (03.12.14) | Date of mailing of the international search report 16 December 2014 (16.12.14) |
| --- | --- |
| Name and mailing address of the ISA/ Japan Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/079617

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-331743 A (Lintec Corp.),<br>25 November 2004 (25.11.2004),<br>paragraphs [0037] to [0061]<br>(Family: none) | 1-7 |
| A | WO 2004/065510 A1 (Lintec Corp.),<br>05 August 2004 (05.08.2004),<br>pages 3 to 5, 'substrate'<br>& JP 4804921 B2        & US 2006/0134406 A1<br>& EP 1589085 A1        & DE 602004013920 D<br>& KR 10-2005-0088251 A  & CN 1738882 A<br>& PT 1589085 E        & TW 00I310230 B<br>& MY 136815 A | 1-7 |
| A | JP 2012-248851 A (Du Pont-Mitsui Polychemicals<br>Co., Ltd.),<br>13 December 2012 (13.12.2012),<br>paragraphs [0016] to [0051]<br>& US 2013/0130001 A1    & EP 2600391 A1<br>& WO 2012/014487 A1    & TW 201213124 A<br>& CN 103026469 A        & KR 10-2013-0032373 A | 1-7 |
| A | JP 11-199840 A (Kureha Chemical Industry Co.,<br>Ltd.),<br>27 July 1999 (27.07.1999),<br>paragraphs [0019], [0020], [0030] to [0038]<br>(Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05211234 A